(19) Europäisches Patentamt
European Patent Office
Office européen des brevets

(11) **EP 2 187 469 B1**

(12) **EUROPEAN PATENT SPECIFICATION**

(45) Date of publication and mention
of the grant of the patent:
**10.05.2017 Bulletin 2017/19**

(21) Application number: **08828436.9**

(22) Date of filing: **22.08.2008**

(51) Int Cl.:
*H01M 8/1018* (2016.01)  *C01G 23/053* (2006.01)
*C01G 33/00* (2006.01)  *H01M 8/1004* (2016.01)
*H01M 4/88* (2006.01)  *H01M 4/90* (2006.01)
*C01G 25/02* (2006.01)

(86) International application number:
**PCT/JP2008/064983**

(87) International publication number:
**WO 2009/028408 (05.03.2009 Gazette 2009/10)**

(54) **ELECTRODE CATALYST LAYER, MEMBRANE ELECTRODE ASSEMBLY AND FUEL CELL**

ELEKTRODENKATALYSATORSCHICHT, MEMBRANELEKTRODENANORDNUNG UND BRENNSTOFFZELLE

COUCHE CATALYTIQUE D'ÉLECTRODE, ENSEMBLE ÉLECTRODE À MEMBRANE ET PILE À COMBUSTIBLE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **29.08.2007 JP 2007222436**

(43) Date of publication of application:
**19.05.2010 Bulletin 2010/20**

(73) Proprietor: **Showa Denko K.K.
Tokyo 105-8518 (JP)**

(72) Inventors:
• **KUROZUMI, Tadatoshi**
**Chiba-shi**
**Chiba 267-0056 (JP)**

• **SHISHIKURA, Toshikazu**
**Chiba-shi**
**Chiba 267-0056 (JP)**
• **MONDEN, Ryuji**
**Chiba-shi**
**Chiba 267-0056 (JP)**

(74) Representative: **Strehl Schübel-Hopf & Partner
Maximilianstrasse 54
80538 München (DE)**

(56) References cited:
**EP-A1- 1 562 247    EP-A1- 1 806 798
JP-A- H1 021 932    JP-A- S59 225 740
JP-A- 2001 278 625   JP-A- 2003 238 159
JP-A- 2005 537 204   JP-A- 2006 508 501
JP-A- 2007 213 859**

**Description**

FIELD OF THE INVENTION

The present invention relates to electrocatalyst layers, membrane electrode assemblies and fuel cells.

BACKGROUND OF THE INVENTION

In fuel cells, a layer containing a catalyst for electrode (hereinafter, also the electrocatalyst) is usually provided on the surface of a cathode (air electrode) or an anode (fuel electrode). (Such layers are also referred to as the electrocatalyst layers hereinafter.)
Typical electrocatalysts are platinum catalysts that are stable at high potential and have high catalytic performance. However, since platinum is expensive and exists in a limited amount, alternative catalysts have been desired.
Metal oxide electrocatalysts attract attention as cathode catalysts alternative to the platinum catalysts. Metal oxides are generally stable and are not corroded in acidic electrolytes or at high potential. Further, metal oxide electrocatalyst layers formed on the surface of electrodes stabilize the structure of the electrodes.
For example, Patent Document 1 (JP-A-2004-95263) discloses fuel cell electrocatalysts containing a metal oxide such as $WO_3$, $TiO_2$, $ZrO_2$, $PtO$, $Sb_2O_4$ or $Sb_2O_3$. However, the fuel cell catalysts also involve platinum and still have the problems as described above.
Patent Document 2 (JP-A-2005-63677) discloses fuel cells that have an electrocatalyst selected from ruthenium oxide, titanium oxide, vanadium oxide, manganese oxide, cobalt oxide, nickel oxide and tungsten oxide. However, these metal oxides as electrocatalysts show low oxygen reduction activity.

Patent Document 1: JP-A-2004-95263
Patent Document 2: JP-A-2005-63677

DISCLOSURE OF THE INVENTION

The present invention is aimed at solving the problems in the background art as described above. It is therefore an object of the invention to provide electrocatalyst layers containing an electrocatalyst with high oxygen reduction activity, membrane electrode assemblies including such catalyst layers, and fuel cells having the membrane electrode assemblies.
The present inventors studied diligently to solve the problems in the art as above. They have then found that electrocatalysts that are formed of metal oxides obtained by a specific method show high oxygen reduction activity and are suitably used in electrocatalyst layers. The present invention has been completed based on the finding.
The present invention is concerned with the following .

(1) An electrocatalyst layer comprising an electrocatalyst, the electrocatalyst comprising a metal oxide obtained by thermally decomposing a metal organic compound selected from the group consisting of metal alkoxides, metal carboxylates, metal amides and metal/beta-diketone complexes, wherein the metal element forming the metal organic compound is one selected from the group consisting of niobium, titanium, tantalum and zirconium.
(2) The electrocatalyst layer described in (1) above, wherein the metal element forming the metal organic compound is niobium or titanium.
(3) The electrocatalyst layer described in any one of (1) or (2) above, wherein the thermal decomposition is performed at a temperature in the range of 200 to 1000°C.
(4) The electrocatalyst layer described in any one of (1) to (3) above, wherein the electrocatalyst is a powder.
(5) The electrocatalyst layer described in any one of (1) to (4) above, wherein the metal organic compound contains an oxygen atom.
(6) The electrocatalyst layer described in any one of (1) to (5) above, wherein the electrocatalyst has a BET specific surface area in the range of 1 to 1000 $m^2$/g.
(7) The electrocatalyst layer described in any one of (1) to (6) above, wherein the electrocatalyst is obtained by crushing the metal oxide.
(8) The electrocatalyst layer described in any one of (1) to (7) above, which further comprises electron conductive particles.
(9) A membrane electrode assembly comprising a cathode, an anode and an electrolyte membrane arranged between the cathode and the anode, wherein the cathode has the electrocatalyst layer described in any one of (1) to (8) above.
(10) A fuel cell comprising the membrane electrode assembly described in (9) above.
(11) The fuel cell described in (10) above, which is a polymer electrolyte fuel cell.

ADVANTAGEOUS EFFECTS OF THE INVENTION

The electrocatalyst layers according to the invention contain the specific electrocatalysts. The electrocatalysts show high oxygen reduction activity and are stable and resistant to corrosion in acidic electrolytes at high potential.

BRIEF DESCRIPTION OF THE DRAWINGS

Fig. 1 is a graph showing an evaluation of the oxygen reduction activity of a fuel cell electrode (1) in Example 1.
Fig. 2 is an XRD spectrum of an electrocatalyst (1) of Example 1.
Fig. 3 is a graph showing an evaluation of the oxygen reduction activity of a fuel cell electrode (2) in Example 2.
Fig. 4 is an XRD spectrum of an electrocatalyst (2) of Example 2.
Fig. 5 is a graph showing an evaluation of the oxygen reduction activity of a fuel cell electrode (3) in Example 3.
Fig. 6 is an XRD spectrum of an electrocatalyst (3) of Example 3.
Fig. 7 is a graph showing an evaluation of the oxygen reduction activity of a fuel cell electrode (4) in Example 4.
Fig. 8 is an XRD spectrum of an electrocatalyst (4) of Example 4.
Fig. 9 is a graph showing an evaluation of the oxygen reduction activity of a fuel cell electrode (5) in Example 5.
Fig. 10 is an XRD spectrum of an electrocatalyst (5) of Example 5.
Fig. 11 is a graph showing an evaluation of the oxygen reduction activity of a fuel cell electrode (6) in Example 6.
Fig. 12 is an XRD spectrum of an electrocatalyst (6) of Example 6.
Fig. 13 is a graph showing an evaluation of the oxygen reduction activity of a fuel cell electrode (7) in Example 7.
Fig. 14 is an XRD spectrum of an electrocatalyst (7) of Example 7.
Fig. 15 is a graph showing an evaluation of the oxygen reduction activity of a fuel cell electrode in Comparative Example 2.
Fig. 16 is an XRD spectrum of an electrocatalyst of Comparative Example 2.
Fig. 17 is a graph showing an evaluation of the oxygen reduction activity of a fuel cell electrode in Comparative Example 3.
Fig. 18 is an XRD spectrum of an electrocatalyst of Comparative Example 3.
Fig. 19 is a graph showing an evaluation of the oxygen reduction activity of a fuel cell electrode in Comparative Example 4.
Fig. 20 is an XRD spectrum of an electrocatalyst of Comparative Example 4.
Fig. 21 is a graph showing an evaluation of the oxygen reduction activity of a fuel cell electrode in Comparative Example 5.
Fig. 22 is an XRD spectrum of an electrocatalyst of Comparative Example 5.
Fig. 23 is a graph showing an evaluation of the oxygen reduction activity of a fuel cell electrode in Comparative Example 6.
Fig. 24 is an XRD spectrum of an electrocatalyst of Comparative Example 6.
Fig. 25 is a graph showing the ionization potential of the electrocatalyst (1) of Example 1.

PREFERRED EMBODIMENTS FOR CARRYING OUT THE INVENTION

[Electrocatalyst layers]

The electrocatalyst layers of the invention contain an electrocatalyst that is formed of a metal oxide obtained by thermally decomposing a metal organic compound.

The metal element forming the metal organic compound is preferably a transition metal that easily shows a catalytic performance. Of the transition metals, Group IVa and Group Va transition metals that are electrochemically stable in acidic solutions are preferable, and a transition metal element selected from the group consisting of niobium, titanium, tantalum and zirconium is more preferable. In particular, niobium and titanium are preferable because of high availability.

Metal organic compounds containing an oxygen atom are preferable, with examples including metal alkoxides, metal carboxylates, metal amides and metal/β-diketone complexes. In particular, metal alkoxides and metal carboxylates having at least one metal-oxygen bond, and metal/β-diketone complexes in which at least one oxygen atom is coordinated to the metal atom are preferable. The metal alkoxides and the metal carboxylates are particularly preferred due to low costs and easy thermal decomposition.

Compounds having no organic groups, for example titanium tetrachloride ($TiCl_4$), are excluded from the metal organic compounds.

In a preferred embodiment, the metal organic compounds are thermally decomposable at 200 to 1000°C. Herein, the term thermal decomposition means that the organic groups contained in the metal organic compounds are decomposed by heat and disappear. Particularly preferably, the metal alkoxides and the metal carboxylates have a linear carbon chain because the organic groups are easily decomposed. The number of carbon atoms is usually about 1 to 30, and preferably 1 to 18.

Use as fuel cell electrocatalysts requires oxygen reduction activity. The electrocatalysts according to the present invention have excellent oxygen reduction activity and are suitably used as fuel cell electrocatalysts.

The thermal decomposition of the metal organic compounds gives metal oxides, usually in the form of powder. The present inventors assume that the metal oxides as electrocatalysts show high oxygen reduction activity because they have high crystallinity and oxygen defects formed on the surface thereof.

(Metal oxides)

The metal oxides used in the invention are obtained by thermally decomposing metal organic compounds.

The metal organic compounds are as described hereinabove.

The metal organic compounds are usually in the form of powder. Thermally decomposing the powdery metal organic compounds gives powdery metal oxides.

The metal organic compounds may be thermally decomposed by electric furnace methods, chemical flame methods, plasma methods and laser methods. Electric furnace methods are preferred because of easy control of the reaction.

The thermal decomposition temperature is usually in the range of 200 to 1000°C, preferably 400 to 800°C, and more preferably 500 to 700°C.

Temperatures less than 200°C tend to result in insufficient thermal decomposition and residual ashes.

If the temperature exceeds 1000°C, the metal oxides tend to grow to larger grains.

Oxygen is needed for the metal organic compounds to be thermally decomposed to metal oxides. When the metal organic compounds contain an oxygen atom, it is not necessary that the thermal decomposition should be carried out in an oxygen-containing atmosphere. If the metal organic compounds do not have any oxygen atom, the thermal decomposition should be performed under an oxygen-containing atmosphere. In carrying out the thermal decomposition under an oxygen-containing atmosphere, the oxygen concentration is not particularly limited as long as desired metal oxides are produced. The oxygen concentration may be about 1% by volume, or the thermal decomposition may be performed in air.

The thermal decomposition time may be determined appropriately depending on the kinds of the metal organic compounds, the thermal decomposition temperature or the oxygen concentration. The thermal decomposition time is usually in the range of 1 to 10 hours. The thermal decomposition time includes the temperature increasing time and the temperature decreasing time.

The residual ashes tend to be less and the obtainable metal oxide tends to have higher crystallinity as the thermal decomposition temperature is higher or the thermal decomposition time is longer; however, the obtained metal oxide will grow to larger grains under such conditions and consequently the electrocatalyst formed of the metal oxide will reduce the BET specific surface area. Optimum conditions are determined balancing these facts.

Depending on the kinds of the metal organic compounds and the thermal decomposition temperature, the thermal decomposition can increase the valence of the metal element forming the electrocatalyst. The metal oxides having an increased valence tend to achieve a higher catalytic performance.

Depending on the kinds of the metal elements, the metal oxides from the thermal decomposition of the metal organic compounds may be further heat treated in an inert gas or under reduced pressure. The heat treatment increases oxygen defects on the surface of the metal oxides, and the electrocatalysts formed of such metal oxides tend to achieve higher oxygen reduction activity. The heat treatment is usually performed at 400 to 1200°C. The heat treatment time may be determined appropriately depending on the kinds of the metal elements of the metal oxides, the heat treatment temperature or the oxygen concentration. The heat treatment time is usually in the range of 10 minutes to 5 hours. The heat decomposition time includes the temperature increasing time and the temperature decreasing time. The higher the heat treatment temperature or the longer the heat treatment time, the higher the crystallinity of the obtainable metal oxide but the smaller the specific surface area. Optimum conditions are determined balancing these facts.

(Electrocatalysts)

The electrocatalysts in the invention are formed of metal oxides obtained by thermally decomposing the metal organic compounds.

The electrocatalysts are preferably in the form of powder. Powdery electrocatalysts have an increased area and achieve a higher catalytic performance.

As described hereinabove, the metal oxides are usually obtained in the form of powder. Therefore, the metal oxide obtained may be used directly as the electrocatalyst. In a preferred embodiment, the metal oxide is crushed to finer powder. The electrocatalyst formed of finer metal oxide powder tends to be favorably dispersed in the electrocatalyst layer.

The methods for crushing the metal oxides include roll milling, ball milling, medium stirring milling, and crushing with an air flow crusher, a mortar or a crushing tank. To crush the metal oxide into finer particles, an air flow crusher is preferably used. To facilitate the crushing in small amounts, the use of a mortar is preferable.

The electrocatalyst preferably has a BET specific surface area in the range of 1 to 1000 $m^2/g$, and more preferably 10 to 100 $m^2/g$. If the BET specific surface area is less than 1 $m^2/g$, the catalyst area is insufficient. If the BET specific surface area is in excess of 1000 $m^2/g$, the particles tend to aggregate and cause difficult handling.

The BET specific surface area in the invention may be measured with a commercially available BET adsorption apparatus. For example, Micromeritics Gemini 2360 manufactured by Shimadzu Corporation may be used.

As described above, the electrocatalyst is preferably powder to achieve a higher catalytic performance.

The particle diameter of the electrocatalyst powder may be determined from the BET specific surface area, based on the equation (1) below regarding the particles to be spherical.

$$D = 6/\rho S \cdots (1)$$

D: particle diameter ($\mu$m) of electrocatalyst powder
$\rho$: specific gravity (g/cm$^3$) of electrocatalyst powder
S: BET specific surface area (m$^2$/g) of electrocatalyst powder

The electrocatalyst preferably has an ionization potential in the range of 4.9 to 5.5 eV, more preferably 5.0 to 5.4 eV, and still more preferably 5.1 to 5.3 eV. This ionization potential ensures that the electrocatalyst shows high oxygen reduction activity. Although the details are unclear, the present inventors assume that the electrocatalyst having the above ionization potential achieves high oxygen reduction activity because the metal oxide forming the electrocatalyst has an electronic state suited for oxygen reduction.

In the invention, the ionization potential is measured by a method as will be described in the working examples later.

The electrocatalyst preferably has an oxygen reduction onset potential of not less than 0.4 V as measured versus a reversible hydrogen electrode (vs. NHE) by the measurement method (A) described below.

[Measurement method (A)]

The electrocatalyst dispersed in electron conductive carbon particles is added to a solvent such that the electrocatalyst and the carbon particles account for 1% by mass relative to the solvent. The mixture is ultrasonically stirred to give a suspension. The carbon herein is carbon black (specific surface area: 100-300 m$^2$/g) (e.g., XC-72 manufactured by Cabot Corporation), and the electrocatalyst is dispersed therein with an electrocatalyst: carbon mass ratio of 95:5. The solvent is a mixture of isopropyl alcohol:water (= 2:1 by mass).

While ultrasonicating the suspension, a 30 $\mu$L portion thereof is collected and is quickly dropped on a glassy carbon electrode (diameter: 5.2 mm). After the dropping, the suspension is dried at 120°C for 1 hour to form a layer containing the electrocatalyst (hereinafter, also the electrocatalyst layer) on the glassy carbon electrode.

Subsequently, 10 $\mu$L of Nafion (a 5% Nafion solution (DE521) manufactured by Du Pont Kabushiki Kaisha) diluted ten times with pure water is dropped on the electrocatalyst layer and dried at 120°C for 1 hour.

The electrode manufactured above is polarized in a 0.5 mol/dm$^3$ sulfuric acid solution at 30°C under an oxygen atmosphere or a nitrogen atmosphere at a potential scanning rate of 5 mV/sec, thereby recording a current-potential curve. As a reference, a reversible hydrogen electrode is polarized in a sulfuric acid solution of the same concentration. In the current-potential curve, the potential at which the reduction current starts to differ by 0.2 ($\mu$A/cm$^2$ or more between the polarization under the oxygen atmosphere and that under the nitrogen atmosphere is defined as the oxygen reduction onset potential.

If the oxygen reduction onset potential is less than 0.7 V (vs. NHE), the use of the electrocatalyst in a fuel cell cathode may cause the generation of hydrogen peroxide. For the oxygen reduction, the oxygen reduction onset potential is preferably 0.85 V (vs. NHE) or more. A higher oxygen reduction onset potential is more preferable. The upper limit thereof is not particularly limited but is theoretically 1.23 V (vs. NHE).

The electrocatalyst layer of the invention that is formed of the above electrocatalyst is preferably used at a potential of not less than 0.4 V (vs. NHE) in an acidic electrolyte. The upper limit of the potential depends on the stability of the electrode. The electrocatalyst of the invention may be used at as high a potential as about 1.23 V (vs. NHE) which is the oxygen generation potential.

At a potential of less than 0.4 V (vs. NHE), the metal oxide can exist stably but oxygen cannot be reduced sufficiently. electrocatalyst layers having such a low potential are not useful in membrane electrode assemblies for fuel cells.

Preferably, the electrocatalyst layer further contains electron conductive particles. When the electrocatalyst layer containing the electrocatalyst further contains electron conductive particles, the reduction current may be increased because the electron conductive particles establish electrical contacts with the electrocatalyst to induce electrochemical reaction.

The electron conductive particles are generally used as a carrier for the electrocatalyst.

Examples of the electron conductive particles include carbons, conductive polymers, conductive ceramics, metals and conductive inorganic oxides such as tungsten oxide and iridium oxide. These electron conductive particles may be used singly or in combination with one another. In particular, carbon or a mixture of carbon and other electron conductive particles is preferable because carbon has a large specific surface area. When the electrocatalyst layer contains the electrocatalyst and carbon, the reduction current may be further increased.

Examples of the carbons include carbon blacks, graphites, black leads, activated carbons, carbon nanotubes, carbon nanofibers, carbon nanohorns and fullerenes. If the particle diameter of carbon is excessively small, the carbon may not be able to form an electron conductive path. If the particle diameter is excessively large, the electrocatalyst layer tends to reduce gas diffusion properties or the catalyst usage rate tends to be lowered. The carbon particle diameter is preferably in the range of 10 to 1000 nm, and more preferably 10 to 100 nm.

When the carbon is used as the electron conductive particles, the mass ratio of the electrocatalyst and the carbon (electrocatalyst:electron conductive particles) is preferably in the range of 4:1 to 1000:1.

In a usual embodiment, the electrocatalyst layer further contains an electrolyte such as a polymer electrolyte or a conductive polymer.

The polymer electrolytes may be any polymer electrolytes generally used in electrocatalyst layers without limitation. Specific examples include perfluorocarbon polymers having a sulfonic acid group (such as Nafion (a 5% Nafion solution (DE521) manufactured by Du Pont Kabushiki Kaisha), hydrocarbon polymer compounds having a sulfonic acid group, polymer compounds doped with inorganic acids such as phosphoric acid, organic/inorganic hybrid polymers partially substituted with proton conductive functional groups, and proton conductors composed of a polymer matrix impregnated with a phosphoric acid solution or a sulfuric acid solution. Of these, Nafion (a 5% Nafion solution (DE521) manufactured by Du Pont Kabushiki Kaisha) is preferable.

The conductive polymers are not particularly limited. Examples thereof include polyacetylene, poly-p-phenylene, polyaniline, polyalkylaniline, polypyrrole, polythiophene, polyindole, poly-1,5-diaminoanthraquinone, polyaminodiphenyl, poly(o-phenylenediamine), poly(quinolinium) salt, polypyridine, polyquinoxaline and polyphenylquinoxaline. Of these, polypyrrole, polyaniline and polythiophene are preferred, and polypyrrole is more preferred.

The electrocatalyst layers according to the present invention have high oxygen reduction activity, and the electrocatalyst contained therein is resistant to corrosion in acidic electrolytes at high potential. Accordingly, the electrocatalyst layers of the invention are suited for use in fuel cell cathodes (as cathode catalyst layers). In particular, the electrocatalyst layers are suitably provided in cathodes of membrane electrode assemblies in polymer electrolyte fuel cells.

The electrocatalyst may be dispersed on the electron conductive particles as carriers by methods such as airborne dispersion methods and in-liquid dispersion methods. The in-liquid dispersion methods are preferable because the electrocatalyst layer may be simply prepared from a dispersion of the electrocatalyst and the electron conductive particles in a solvent. Exemplary in-liquid dispersion methods include an orifice-choked flow method, a rotational shear flow method and an ultrasonic method. The solvents used in the in-liquid dispersion methods are not particularly limited as long as the electrocatalysts or the electron conductive particles are not corroded and are dispersed therein. Volatile liquid organic solvents and water are generally used.

When the electrocatalyst is dispersed on the electron conductive particles, the electrolyte described above and a dispersant may be dispersed together.

The electrocatalyst layer may be formed by any methods without limitation. For example, a suspension containing the electrocatalyst, the electron conductive particles and the electrolyte may be applied to an electrolyte membrane or a gas diffusion layer as described later. The application methods include dipping, screen printing, roll coating and spraying. In another embodiment, a suspension containing the electrocatalyst, the electron conductive particles and the electrolyte may be applied or filtered on a substrate to form an electrocatalyst layer, and the electrocatalyst layer may be transferred to an electrolyte membrane.

[Use]

The membrane electrode assemblies of the invention have a cathode, an anode and an electrolyte membrane between the cathode and the anode. The cathode has the electrocatalyst layer as described hereinabove.

The electrolyte membranes may be general perfluorosulfonic acid electrolyte membranes or hydrocarbon electrolyte membranes. Further, polymer fine-pore membranes impregnated with liquid electrolyte, or porous membranes filled with polymer electrolyte may be used.

The cathode is usually composed of the electrocatalyst layer described above and a gas diffusion layer.

The gas diffusion layers are not particularly limited as long as they have electron conductivity, high gas diffusion properties and high corrosion resistance. Carbon-based porous materials such as carbon paper and carbon cloth, and stainless steel and anticorrosive-coated aluminum foils for weight reduction may be generally used.

The fuel cells according to the present invention have the membrane electrode assemblies as described above.

The electrode reaction in fuel cells takes place at a three-phase interface (electrolyte- electrocatalyst -reaction gas). The fuel cells are classified depending on the electrolytes used, into several types such as molten carbonate fuel cells (MCFC), phosphoric acid fuel cells (PAFC), solid oxide fuel cells (SOFC) and polymer electrolyte fuel cells (PEFC). In particular, the membrane electrode assemblies of the invention are suitably used in polymer electrolyte fuel cells.

EXAMPLES

The present invention will be described based on examples hereinbelow.

[Example 1]

(Production of electrocatalyst)

Titanium (IV) 2-ethylhexanoate (manufactured by Wako Pure Chemical Industries Ltd.) in an amount of 5. 0 g was placed in an alumina crucible and was heat treated in an electric furnace (desktop muffle furnace KDF P90 manufactured by DENKEN CO., LTD.) under a stream of nitrogen at 50 NL/min under the following conditions.

Temperature increasing rate: 20°C/min
Heat treatment temperature: 600°C
Heat treatment time (retention time): 2 hours
After the heat treatment, the product was naturally cooled. As a result, 0.66 g of titanium (IV) oxide was obtained. The titanium (IV) oxide was sufficiently crushed in a mortar to give an electrocatalyst (1).

(Production of fuel cell electrode)

The oxygen reduction activity was determined in the following manner. The electrocatalyst (1) in an amount of 0.95 g and carbon (XC-72 manufactured by Cabot Corporation) weighing 0.5 g were added to 10 g of pure water. The mixture was ultrasonically stirred to give a suspended mixture. The mixture in an amount of 30 $\mu$L was applied on a glassy carbon electrode (diameter: 5.2 mm) and was dried at 50°C for 1 hour. Subsequently, 10 $\mu$L of Nafion® (a 5% Nafion solution (DE521) manufactured by Du Pont Kabushiki Kaisha) diluted ten times with pure water was applied thereon and was dried at 120°C for 1 hour. A fuel cell electrode (1) was thus manufactured.

(Evaluation of oxygen reduction activity)

The fuel cell electrode (1) manufactured above was evaluated for catalytic performance (oxygen reduction activity) as described below.

The fuel cell electrode (1) was polarized in a 0.5 mol/dm$^3$ sulfuric acid solution at 30°C under an oxygen atmosphere or a nitrogen atmosphere at a potential scanning rate of 5 mV/sec, thereby recording a current-potential curve. As a reference, a reversible hydrogen electrode was polarized in a sulfuric acid solution of the same concentration.

In the current-potential curve obtained, the potential at which the reduction current started to differ by 0.2 $\mu$A/cm$^2$ or more between the polarization under the oxygen atmosphere and that under the nitrogen atmosphere was defined as the oxygen reduction onset potential. The difference between the reduction currents was defined as the oxygen reduction current.

The catalytic performance (oxygen reduction activity) of the fuel cell electrode (1) was evaluated based on the oxygen reduction onset potential and the oxygen reduction current.

In detail, the higher the oxygen reduction onset potential and the higher the oxygen reduction current, the higher the catalytic performance (oxygen reduction activity) of the fuel cell electrode (1).

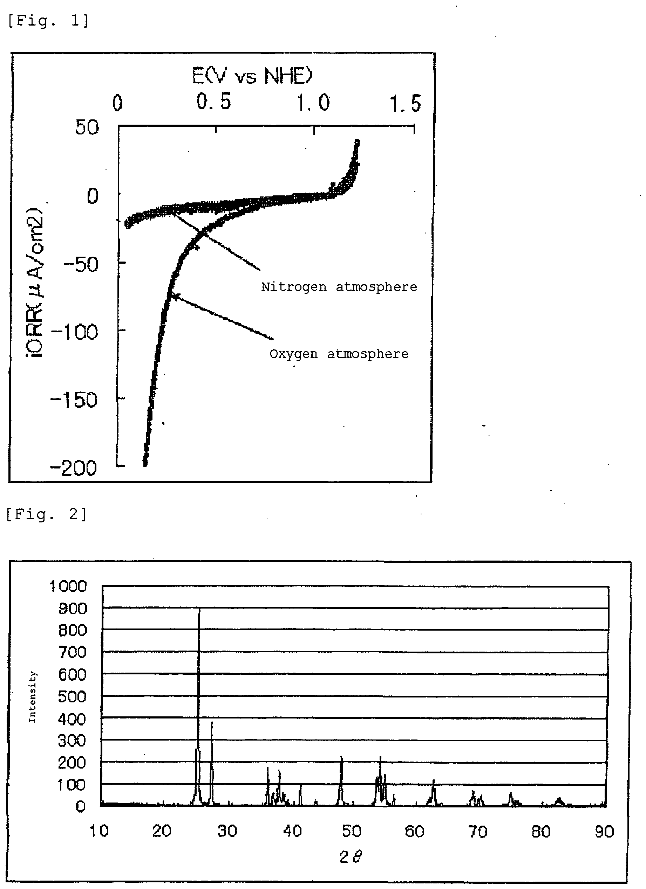

The current-potential curve recorded during the above measurement is shown in Fig. 1.

The fuel cell electrode (1) manufactured in Example 1 had an oxygen reduction onset potential of 0.9 V and was found to have high oxygen reduction activity.

(Ionization potential)

The ionization potential of the electrocatalyst (1) was measured using photoelectron spectrometer MODEL AC-2 manufactured by RIKEN KEIKI Co. , Ltd. The ionization potential obtained is set forth in Table 1. The measurement method is described below.

The electrocatalyst (1) was put and spread on a UV irradiation area of a sample table of the measurement apparatus using a spatula. Scanning was made while the UV excitation energy was raised starting from 4.5 eV to 5.7 eV under the following conditions. Some electrocatalyst s did not show the photoelectron emission threshold at 4.5 to 5.7 eV. In such cases, scanning was made while raising the excitation energy from 3.4 eV minimum to 6.2 eV maximum.

Light energy: 500 nW
Counting time: 15 seconds
Scanning interval: 0.1 eV

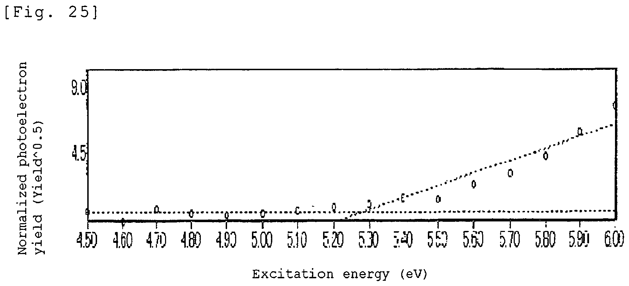

The photoelectrons emitted by the excitation were measured, and a graph was made with the normalized photoelectron yield (Yield^n) on the vertical axis and the excitation energy (eV) on the horizontal axis. Herein, the normalized photoelectron yield (Yield^n) indicates a photoelectron yield per unit light energy, multiplied by the factor n. The factor n was 0. 5. The excitation energy before the electron emission started, and that after the electron emission started were determined with the apparatus. The graph is set forth in Fig. 25. The photoelectron emission threshold was obtained as the ionization potential from the graph. The ionization potential is shown in Table 1.

(X-ray diffractometry)

The electrocatalyst (1) was analyzed by X-ray diffractometry using Rotor Flex manufactured by Rigaku Denki Co., Ltd. Fig. 2 shows an XRD spectrum of the sample. The electrocatalyst was identified to be anatase titanium oxide.

(BET specific surface area)

The BET specific surface area of the electrocatalyst (1) was measured using Micromeritics Gemini 2360 manufactured by Shimadzu Corporation.

The specific surface area of the electrocatalyst (1) was 39 $m^2/g$.

[Example 2]

(Production of electrocatalyst)

The procedures of Example 1 were repeated except that 5.0 g of the titanium (IV) 2-ethylhexanoate (manufactured by Wako Pure Chemical Industries Ltd.) was replaced by 5.0 g of niobium (IV) 2-ethylhexanoate (manufactured by Wako Pure Chemical Industries Ltd.), thereby obtaining 1.0 g of niobium oxide. The niobium oxide was sufficiently crushed in a mortar to give an electrocatalyst (2).

(Production of fuel cell electrode)

A fuel cell electrode (2) was produced in the same manner as in Example 1 except that the electrocatalyst (1) was replaced by the electrocatalyst (2).

(Evaluation of oxygen reduction activity)

The oxygen reduction activity was evaluated in the same manner as in Example 1 except that the fuel cell electrode (1) was replaced by the fuel cell electrode (2).

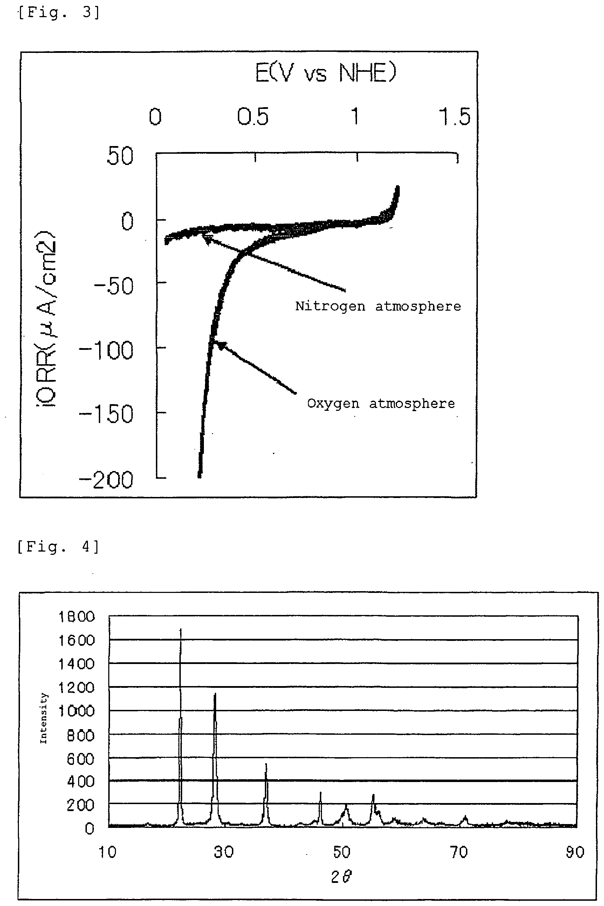

The current-potential curve recorded during the measurement is shown in Fig. 3.

The fuel cell electrode (2) manufactured in Example 2 had an oxygen reduction onset potential of 0.9 V (vs. NHE) and was found to have high oxygen reduction activity.

(Ionization potential)

The ionization potential was measured in the same manner as in Example 1 except that the electrocatalyst (1) was replaced by the electrocatalyst (2). The ionization potential is shown in Table 1.

(X-ray diffractometry)

The X-ray diffractometry was performed in the same manner as in Example 1 except that the electrocatalyst (1) was replaced by the electrocatalyst (2).
Fig. 4 shows an XRD spectrum of the sample. The electrocatalyst was identified to be orthorhombic niobium oxide.

(BET specific surface area)

The BET specific surface area of the niobium oxide powder was measured in the same manner as in Example 1. The BET specific surface area of the niobium oxide powder was 17.8 $m^2$/g.

[Example 3]

(Production of electrocatalyst)

The procedures of Example 1 were repeated except that 5.0 g of the titanium (IV) 2-ethylhexanoate (manufactured by Wako Pure Chemical Industries Ltd.) was replaced by 5. 0 g of niobium (IV) 2-ethylhexanoate (manufactured by Wako Pure Chemical Industries Ltd.) and the heat treatment temperature was changed from 600 °C to 800 °C, thereby obtaining 1.0 g of niobium oxide. The niobium oxide was sufficiently crushed in a mortar to give an electrocatalyst (3).

(Production of fuel cell electrode)

A fuel cell electrode (3) was produced in the same manner as in Example 1 except that the electrocatalyst (1) was replaced by the electrocatalyst (3).

(Evaluation of oxygen reduction activity)

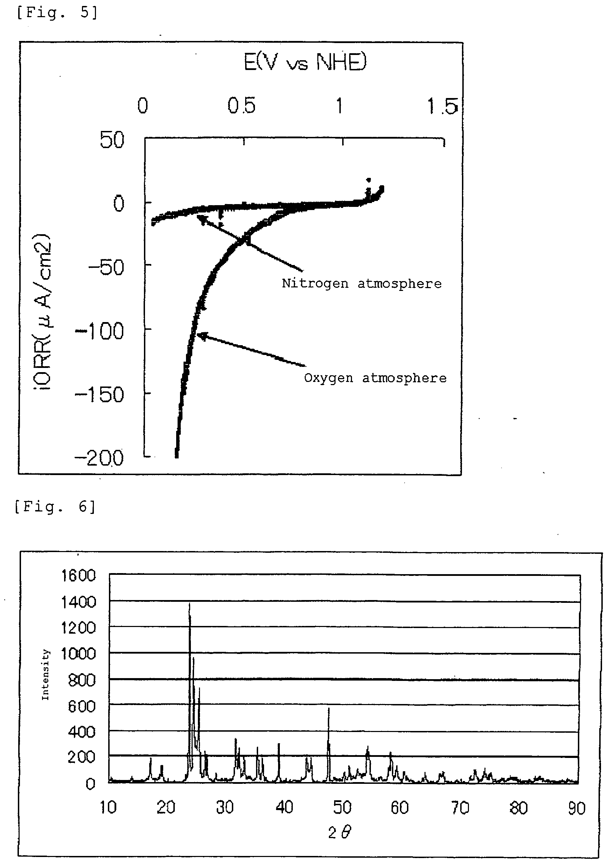

The oxygen reduction activity was evaluated in the same manner as in Example 1 except that the fuel cell electrode (1) was replaced by the fuel cell electrode (3).
The current-potential curve recorded during the measurement is shown in Fig. 5.
The fuel cell electrode (3) manufactured in Example 3 had an oxygen reduction onset potential of 0.9 V (vs. NHE) and was found to have high oxygen reduction activity.

(Ionization potential)

The ionization potential was measured in the same manner as in Example 1 except that the electrocatalyst (1) was replaced by the electrocatalyst (3). The ionization potential is shown in Table 1.

(X-ray diffractometry)

The X-ray diffractometry was performed in the same manner as in Example 1 except that the electrocatalyst (1) was replaced by the electrocatalyst (3).
Fig. 6 shows an XRD spectrum of the sample. The electrocatalyst was identified to be monoclinic niobium oxide.

(BET specific surface area)

The BET specific surface area of the niobium oxide powder was measured in the same manner as in Example 1. The BET specific surface area of the niobium oxide powder was 3.8 $m^2$/g.

[Example 4]

(Production of electrocatalyst)

The procedures of Example 1 were repeated except that 5.0 g of the titanium (IV) 2-ethylhexanoate (manufactured by Wako Pure Chemical Industries Ltd.) was replaced by 5.0 g of niobium (V) ethoxide (manufactured by Wako Pure Chemical Industries Ltd.), thereby obtaining 2.1 g of niobium oxide. The niobium oxide was sufficiently crushed in a mortar to give an electrocatalyst (4).

(Production of fuel cell electrode)

A fuel cell electrode (4) was produced in the same manner as in Example 1 except that the electrocatalyst (1) was replaced by the electrocatalyst (4).

(Evaluation of oxygen reduction activity)

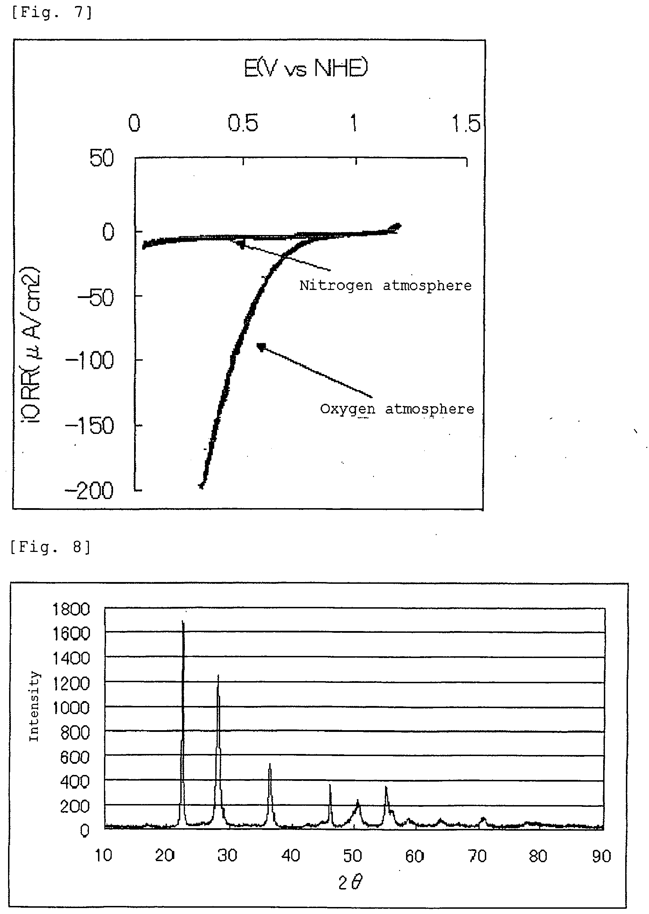

The oxygen reduction activity was evaluated in the same manner as in Example 1 except that the fuel cell electrode (1) was replaced by the fuel cell electrode (4).
The current-potential curve recorded during the measurement is shown in Fig. 7.
The fuel cell electrode (4) manufactured in Example 4 had an oxygen reduction onset potential of 0.9 V (vs. NHE) and was found to have high oxygen reduction activity.

(Ionization potential)

The ionization potential was measured in the same manner as in Example 1 except that the electrocatalyst (1) was replaced by the electrocatalyst (4). The ionization potential is shown in Table 1.

(X-ray diffractometry)

The X-ray diffractometry was performed in the same manner as in Example 1 except that the electrocatalyst (1) was replaced by the electrocatalyst (4).
Fig. 8 shows an XRD spectrum of the sample. The electrocatalyst was identified to be orthorhombic niobium oxide.

(BET specific surface area)

The BET specific surface area of the niobium oxide powder was measured in the same manner as in Example 1. The BET specific surface area of the niobium oxide powder was 26 $m^2$/g.

[Example 5]

(Production of electrocatalyst)

The procedures of Example 1 were repeated except that 5.0 g of the titanium (IV) 2-ethylhexanoate (manufactured by Wako Pure Chemical Industries Ltd.) was replaced by 5.0 g of titanium (IV) tetrabutoxide monomer (manufactured by Wako Pure Chemical Industries Ltd.) and the heat treatment temperature was changed from 600°C to 400 °C, thereby obtaining 1.2 g of titanium oxide. The titanium oxide was sufficiently crushed in a mortar to give an electrocatalyst (5).

(Production of fuel cell electrode)

A fuel cell electrode (5) was produced in the same manner as in Example 1 except that the electrocatalyst (1) was replaced by the electrocatalyst (5).

(Evaluation of oxygen reduction activity)

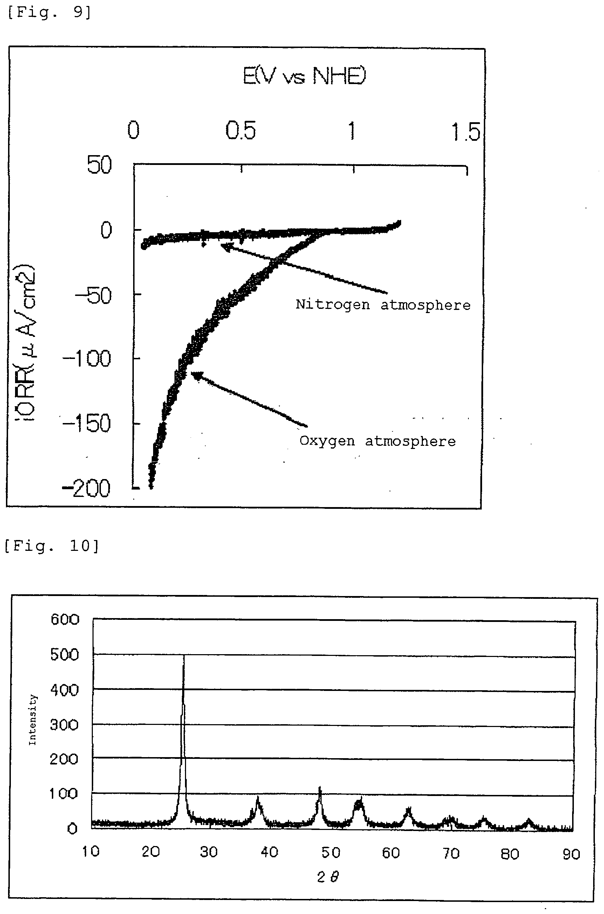

The oxygen reduction activity was evaluated in the same manner as in Example 1 except that the fuel cell electrode (1) was replaced by the fuel cell electrode (5).
The current-potential curve recorded during the measurement is shown in Fig. 9.

The fuel cell electrode (5) manufactured in Example 5 had an oxygen reduction onset potential of 0.9 V (vs. NHE) and was found to have high oxygen reduction activity.

(Ionization potential)

The ionization potential was measured in the same manner as in Example 1 except that the electrocatalyst (1) was replaced by the electrocatalyst (5). The ionization potential is shown in Table 1.

(X-ray diffractometry)

The X-ray diffractometry was performed in the same manner as in Example 1 except that the electrocatalyst (1) was replaced by the electrocatalyst (5).
Fig. 10 shows an XRD spectrum of the sample. The electrocatalyst was identified to be anatase titanium oxide.

(BET specific surface area)

The BET specific surface area of the titanium oxide powder was measured in the same manner as in Example 1. The BET specific surface area of the titanium oxide powder was 59 $m^2/g$.

[Example 6]

(Production of electrocatalyst)

The procedures of Example 1 were repeated except that 5.0 g of the titanium (IV) 2-ethylhexanoate (manufactured by Wako Pure Chemical Industries Ltd.) was replaced by 5.0 g of titanium (IV) tetrabutoxide monomer (manufactured by Wako Pure Chemical Industries Ltd.), thereby obtaining 1.2 g of titanium oxide. The titanium oxide was sufficiently crushed in a mortar to give an electrocatalyst (6).

(Production of fuel cell electrode)

A fuel cell electrode (6) was produced in the same manner as in Example 1 except that the electrocatalyst (1) was replaced by the electrocatalyst (6).

(Evaluation of oxygen reduction activity)

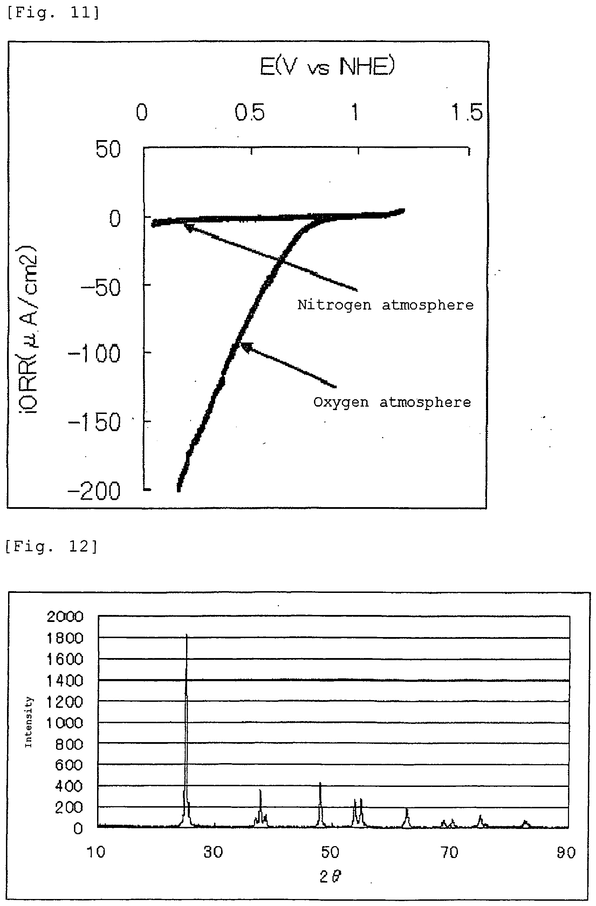

The oxygen reduction activity was evaluated in the same manner as in Example 1 except that the fuel cell electrode (1) was replaced by the fuel cell electrode (6).
The current-potential curve recorded during the measurement is shown in Fig. 11.
The fuel cell electrode (6) manufactured in Example 6 had an oxygen reduction onset potential of 0.9 V (vs. NHE) and was found to have high oxygen reduction activity.

(Ionization potential)

The ionization potential was measured in the same manner as in Example 1 except that the electrocatalyst (1) was replaced by the electrocatalyst (6). The ionization potential is shown in Table 1.

(X-ray diffractometry)

The X-ray diffractometry was performed in the same manner as in Example 1 except that the electrocatalyst (1) was replaced by the electrocatalyst (6).
Fig. 12 shows an XRD spectrum of the sample. The electrocatalyst was identified to be anatase titanium oxide.

(BET specific surface area)

The BET specific surface area of the titanium oxide powder was measured in the same manner as in Example 1. The BET specific surface area of the titanium oxide powder was 27 $m^2/g$.

[Example 7]

(Production of electrocatalyst)

The procedures of Example 1 were repeated except that 5.0 g of the titanium (IV) 2-ethylhexanoate (manufactured by Wako Pure Chemical Industries Ltd.) was replaced by 5.0 g of zirconium (IV) ethoxide (manufactured by Wako Pure Chemical Industries Ltd.), thereby obtaining 2.3 g of zirconium oxide. The zirconium oxide was sufficiently crushed in a mortar to give an electrocatalyst (7).

(Production of fuel cell electrode)

A fuel cell electrode (7) was produced in the same manner as in Example 1 except that the electrocatalyst (1) was replaced by the electrocatalyst (7).

(Evaluation of oxygen reduction activity)

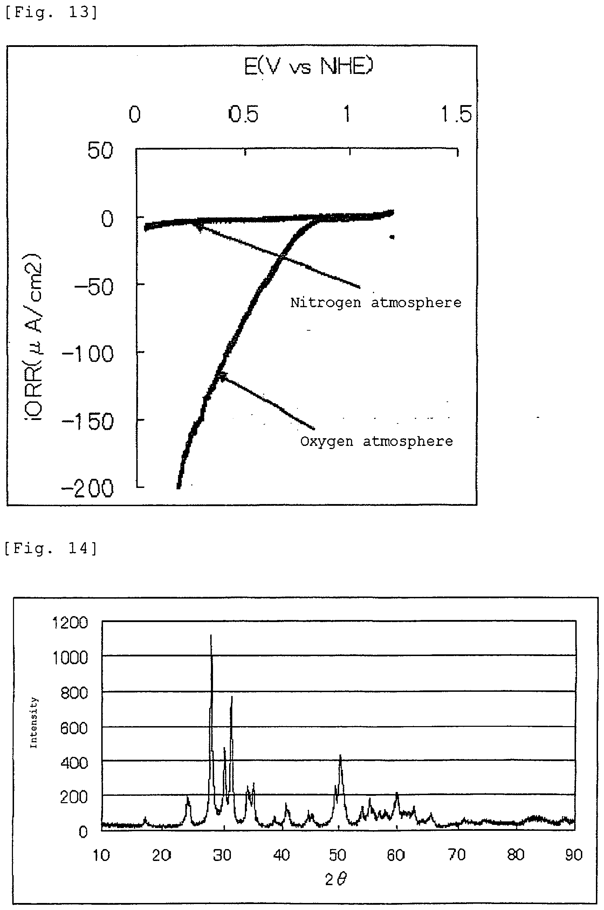

The oxygen reduction activity was evaluated in the same manner as in Example 1 except that the fuel cell electrode (1) was replaced by the fuel cell electrode (7).
The current-potential curve recorded during the measurement is shown in Fig. 13.
The fuel cell electrode (7) manufactured in Example 7 had an oxygen reduction onset potential of 0.9 V (vs. NHE) and was found to have high oxygen reduction activity.

(Ionization potential)

The ionization potential was measured in the same manner as in Example 1 except that the electrocatalyst (1) was replaced by the electrocatalyst (7). The ionization potential is shown in Table 1.

(X-ray diffractometry)

The X-ray diffractometry was performed in the same manner as in Example 1 except that the electrocatalyst (1) was replaced by the electrocatalyst (7).
Fig. 14 shows an XRD spectrum of the sample. The electrocatalyst was identified to be a mixture of monoclinic zirconium oxide and tetragonal zirconium oxide.

(BET specific surface area)

The BET specific surface area of the zirconium oxide powder was measured in the same manner as in Example 1. The BET specific surface area of the zirconium oxide powder was 16 $m^2$/g.

[Comparative Example 1]

(Production of metal oxide)

A titanium tetrachloride ($TiCl_4$) solution (manufactured by Wako Pure Chemical Industries Ltd.) in an amount of 5.0 g was placed in an alumina crucible and was heat treated in an electric furnace (desktop muffle furnace KDF P90 manufactured by DENKEN CO., LTD.) under a stream of $N_2$ at 50 NL/min and a stream of $O_2$ at 0.5 NL/min under the following conditions.
Temperature increasing rate: 20°C/min
Calcination temperature: 600°C
Calcination time: 2 hours

After the heat treatment, the product was naturally cooled. As a result, 1. 6 g of titanium oxide was obtained. The titanium oxide was sufficiently crushed in a mortar.

(Production of electrode)

An electrode was produced in the same manner as in Example 1 except that the electrocatalyst (1) was replaced by the crushed titanium oxide obtained above.

(Evaluation of oxygen reduction activity)

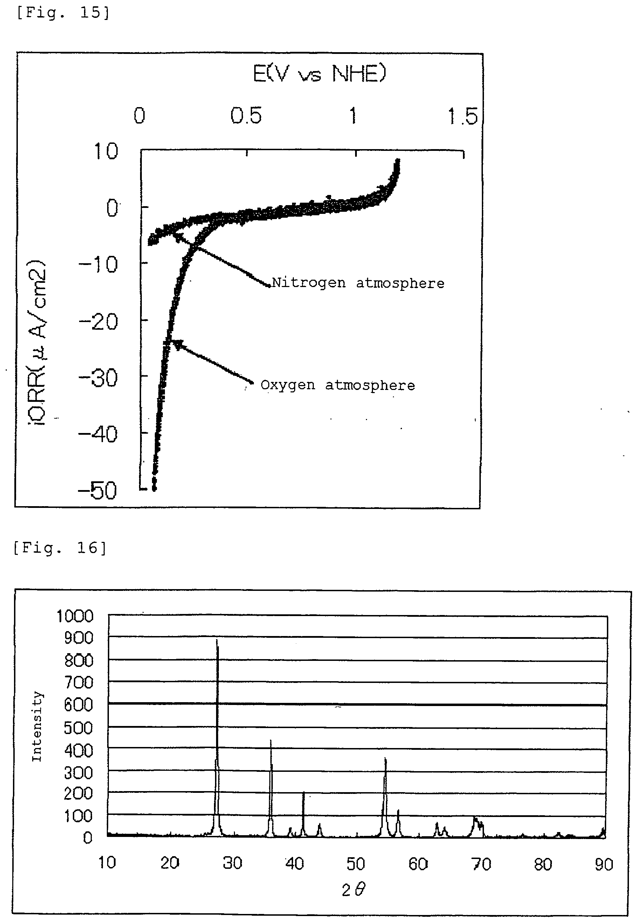

The oxygen reduction activity of the electrode was evaluated in the same manner as in Example 1.
The current-potential curve recorded during the measurement is shown in Fig. 15.
The electrode had an oxygen reduction onset potential of 0.3 V (vs. NHE) and was found to have low oxygen reduction activity.

(Ionization potential)

The ionization potential was measured in the same manner as in Example 1 except that the electrocatalyst (1) was replaced by the crushed titanium oxide. The ionization potential is shown in Table 1.

(X-ray diffractometry)

The X-ray diffractometry of the crushed titanium oxide was performed in the same manner as in Example 1.
Fig. 16 shows an XRD spectrum of the crushed titanium oxide.
The crushed titanium oxide was identified to be rutile titanium oxide.

(BET specific surface area)

The BET specific surface area of the crushed titanium oxide powder was measured in the same manner as in Example 1.
The BET specific surface area of the crushed titanium oxide powder was 9.7 $m^2$/g.

[Comparative Example 2]

(Production of metal oxide)

The procedures of Comparative Example 1 were repeated except that 5.0 g of the titanium tetrachloride ($TiCl_4$) solution (manufactured by Wako Pure Chemical Industries Ltd.) was replaced by 5.0 g of niobium pentachloride ($NbCl_5$) (manufactured by Wako Pure Chemical Industries Ltd.), thereby obtaining 2.4 g of niobium oxide. The niobium oxide was crushed in a mortar.

(Production of electrode)

An electrode was produced in the same manner as in Example 1 except that the electrocatalyst (1) was replaced by the crushed niobium oxide obtained above.

(Evaluation of oxygen reduction activity)

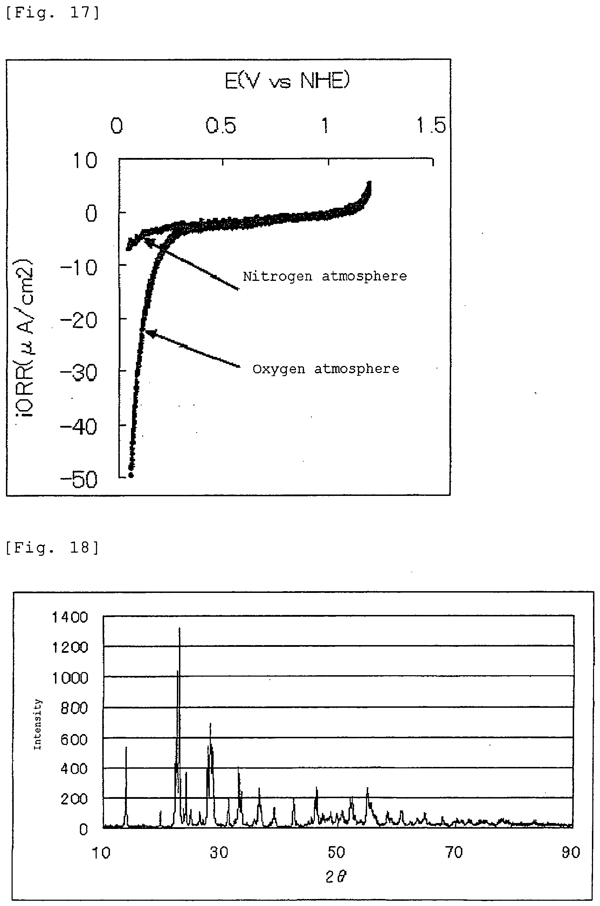

The oxygen reduction activity of the electrode was evaluated in the same manner as in Example 1.
The current-potential curve recorded during the measurement is shown in Fig. 17.
The electrode had an oxygen reduction onset potential of 0.3 V (vs. NHE) and was found to have low oxygen reduction activity.

(Ionization potential)

The ionization potential was measured in the same manner as in Example 1 except that the electrocatalyst (1) was replaced by the crushed niobium oxide. The ionization potential is shown in Table 1.

(X-ray diffractometry)

The X-ray diffractometry of the crushed niobium oxide was performed in the same manner as in Example 1.

Fig. 18 shows an XRD spectrum of the crushed niobium oxide.

The crushed niobium oxide was identified to be a mixture of orthorhombic niobium oxide and monoclinic niobium oxide.

(BET specific surface area)

The BET specific surface area of the crushed niobium oxide powder was measured in the same manner as in Example 1.

The BET specific surface area of the crushed niobium oxide powder was 5.1 $m^2$/g.

[Comparative Example 3]

(Production of metal oxide)

The procedures of Comparative Example 1 were repeated except that 5.0 g of the titanium tetrachloride ($TiCl_4$) solution (manufactured by Wako Pure Chemical Industries Ltd.) was replaced by 5.0 g of niobium pentachloride ($NbCl_5$) (manufactured by Wako Pure Chemical Industries Ltd.) and the calcination temperature was changed from 600°C to 800°C, thereby obtaining 2.4 g of niobium oxide. The niobium oxide was crushed in a mortar.

(Production of electrode)

An electrode was produced in the same manner as in Example 1 except that the electrocatalyst (1) was replaced by the crushed niobium oxide obtained above.

(Evaluation of oxygen reduction activity)

The oxygen reduction activity of the electrode was evaluated in the same manner as in Example 1.

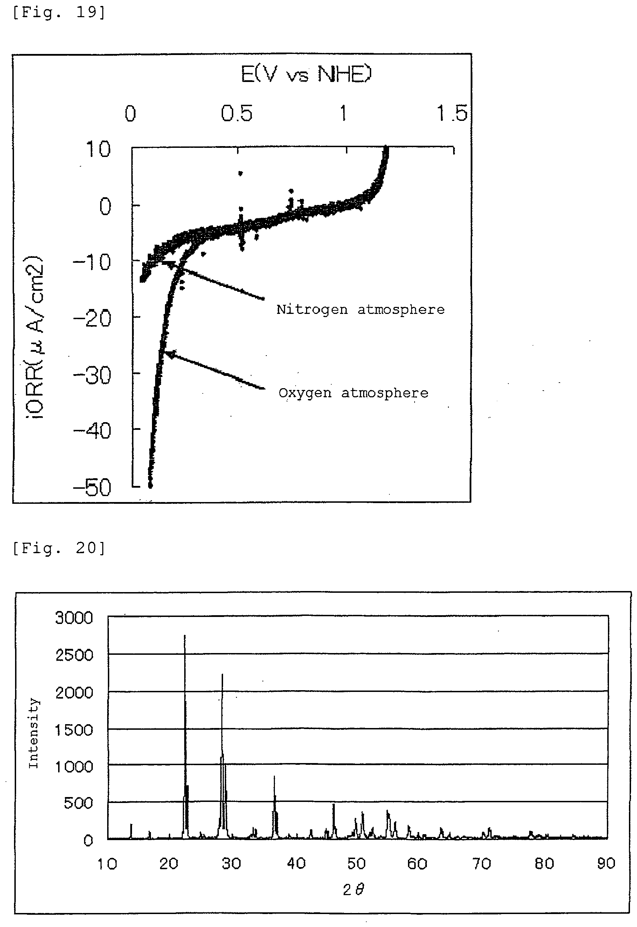

The current-potential curve recorded during the measurement is shown in Fig. 19.

The electrode had an oxygen reduction onset potential of 0.3 V (vs. NHE) and was found to have low oxygen reduction activity.

(Ionization potential)

The ionization potential was measured in the same manner as in Example 1 except that the electrocatalyst (1) was replaced by the crushed niobium oxide. The ionization potential is shown in Table 1.

(X-ray diffractometry)

The X-ray diffractometry of the crushed niobium oxide was performed in the same manner as in Example 1.

Fig. 20 shows an XRD spectrum of the crushed niobium oxide.

The crushed niobium oxide was identified to be orthorhombic niobium oxide.

(BET specific surface area)

The BET specific surface area of the crushed niobium oxide powder was measured in the same manner as in Example 1.

The BET specific surface area of the crushed niobium oxide powder was 2.9 $m^2$/g.

[Comparative Example 4]

(Production of metal oxide)

The procedures of Comparative Example 1 were repeated except that 5.0 g of the titanium tetrachloride ($TiCl_4$) solution (manufactured by Wako Pure Chemical Industries Ltd.) was replaced by 5.0 g of zirconium tetrachloride ($ZrCl_4$) (manufactured by Wako Pure Chemical Industries Ltd.), thereby obtaining 2.6 g of zirconium oxide. The zirconium oxide was crushed in a mortar.

(Production of electrode)

An electrode was produced in the same manner as in Example 1 except that the electrocatalyst (1) was replaced by the crushed zirconium oxide obtained above.

(Evaluation of oxygen reduction activity)

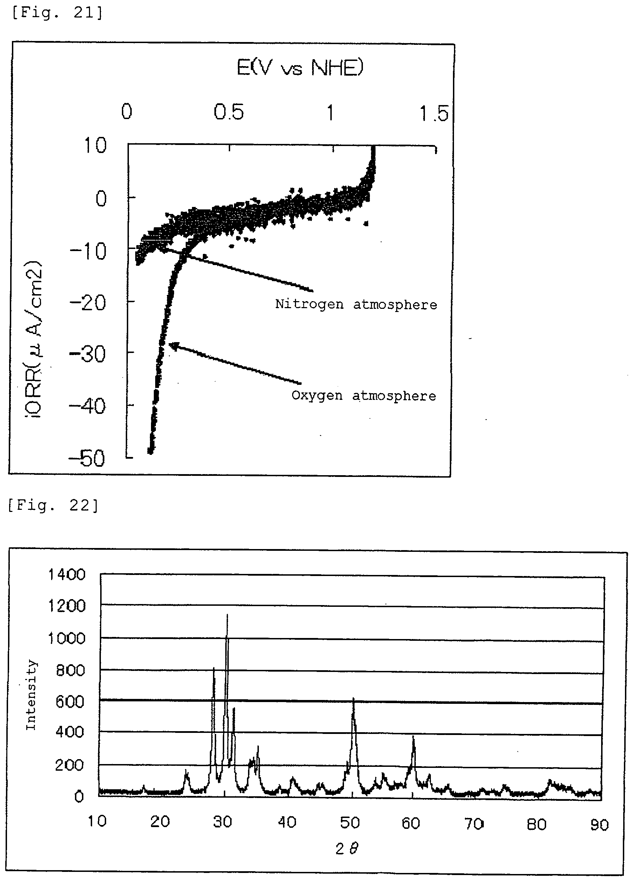

The oxygen reduction activity of the electrode was evaluated in the same manner as in Example 1.
The current-potential curve recorded during the measurement is shown in Fig. 21.
The electrode had an oxygen reduction onset potential of 0.3 V (vs. NHE) and was found to have low oxygen reduction activity.

(Ionization potential)

The ionization potential was measured in the same manner as in Example 1 except that the electrocatalyst (1) was replaced by the crushed zirconium oxide. The ionization potential is shown in Table 1.

(X-ray diffractometry)

The X-ray diffractometry of the crushed zirconium oxide was performed in the same manner as in Example 1.
Fig. 22 shows an XRD spectrum of the crushed zirconium oxide.
The crushed zirconium oxide was identified to be a mixture of monoclinic zirconium oxide and tetragonal zirconium oxide.

(BET specific surface area)

The BET specific surface area of the crushed zirconium oxide powder was measured in the same manner as in Example 1.
The BET specific surface area of the crushed zirconium oxide powder was 11 $m^2/g$.

[Comparative Example 5]

(Production of metal oxide)

The procedures of Comparative Example 1 were repeated except that the calcination temperature was changed from 600°C to 400°C, thereby obtaining 1.6 g of titanium oxide. The titanium oxide was crushed in a mortar.

(Production of electrode)

An electrode was produced in the same manner as in Example 1 except that the electrocatalyst (1) was replaced by the crushed titanium oxide obtained above.

(Evaluation of oxygen reduction activity)

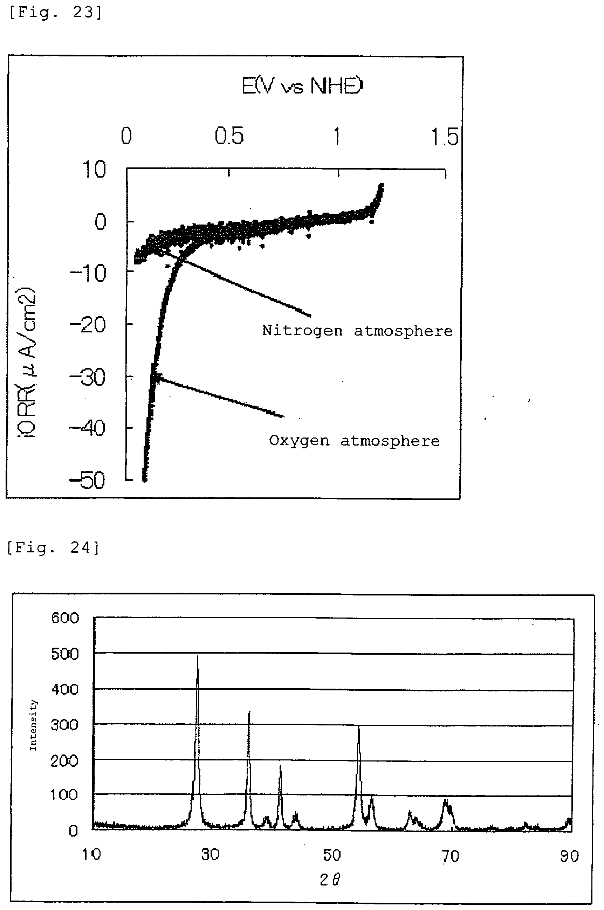

The oxygen reduction activity of the electrode was evaluated in the same manner as in Example 1.
The current-potential curve recorded during the measurement is shown in Fig. 23.
The electrode had an oxygen reduction onset potential of 0.3 V (vs. NHE) and was found to have low oxygen reduction activity.

(Ionization potential)

The ionization potential was measured in the same manner as in Example 1 except that the electrocatalyst (1) was replaced by the crushed titanium oxide. The ionization potential is shown in Table 1.

(X-ray diffractometry)

The X-ray diffractometry of the crushed titanium oxide was performed in the same manner as in Example 1.
Fig. 24 shows an XRD spectrum of the crushed titanium oxide.

The crushed titanium oxide was identified to be rutile titanium oxide.

(BET specific surface area)

The BET specific surface area of the crushed titanium oxide powder was measured in the same manner as in Example 1.

The BET specific surface area of the crushed titanium oxide powder was 20 $m^2/g$.

[Table 1]

|  | Ionization potential (eV) |
|---|---|
| Electrocatalyst of Example 1 | 5.28 |
| Electrocatalyst of Example 2 | 5.25 |
| Electrocatalyst of Example 3 | 5.18 |
| Electrocatalyst of Example 4 | 5.21 |
| Electrocatalyst of Example 5 | 5.20 |
| Electrocatalyst of Example 6 | 5.19 |
| Electrocatalyst of Example 7 | 5.21 |
| Electrocatalyst of Comparative Example 1 | 5.80 |
| Electrocatalyst of Comparative Example 2 | 5.70 |
| Electrocatalyst of Comparative Example 3 | 5.68 |
| Electrocatalyst of Comparative Example 4 | 5.82 |
| Electrocatalyst of Comparative Example 5 | 5.85 |

**Claims**

1. An electrocatalyst layer comprising an electrocatalyst, the electrocatalyst comprising a metal oxide obtained by thermally decomposing a metal organic compound selected from the group consisting of metal alkoxides, metal carboxylates, metal amides and metal/β-diketone complexes, wherein the metal element forming the metal organic compound is one selected from the group consisting of niobium, titanium, tantalum and zirconium.

2. The electrocatalyst layer according to claim 1, wherein the metal element forming the metal organic compound is niobium or titanium.

3. The electrocatalyst layer according to claim 1 or 2, wherein the thermal decomposition is performed at a temperature in the range of 200 to 1000°C.

4. The electrocatalyst layer according to any one of claims 1 to 3, wherein the electrocatalyst is powder.

5. The electrocatalyst layer according to any one of claims 1 to 4, wherein the metal organic compound contains an oxygen atom.

6. The electrocatalyst layer according to any one of claims 1 to 5, wherein the electrocatalyst has a BET specific surface area in the range of 1 to 1000 $m^2/g$.

7. The electrocatalyst layer according to any one of claims 1 to 6, wherein the electrocatalyst is obtained by crushing the metal oxide.

8. The electrocatalyst layer according to any one of claims 1 to 7, which further comprises electron conductive particles.

9. A membrane electrode assembly comprising a cathode, an anode and an electrolyte membrane arranged between the cathode and the anode, wherein the cathode has the electrocatalyst layer described in any one of claims 1 to 8.

**10.** A fuel cell comprising the membrane electrode assembly described in claim 9.

**11.** The fuel cell according to claim 10, which is a polymer electrolyte fuel cell.

**Patentansprüche**

**1.** Elektrokatalysatorschicht, die einen Elektrokatalysator umfasst, der ein durch thermisches Zersetzen einer metallorganischen Verbindung erhaltenes Metalloxid aufweist, die aus der Gruppe ausgewählt ist, die aus Metallalkoxiden, Metallcarboxylaten, Metallamiden und Metall/β-Diketonkomplexen besteht, wobei das die metallorganische Verbindung bildende Metallelement eines ist, das aus der aus Niob, Titan, Tantal und Zirkonium bestehenden Gruppe ausgewählt ist.

**2.** Elektrokatalysatorschicht nach Anspruch 1, wobei das die metallorganische Verbindung bildende Metallelement Niob oder Titan ist.

**3.** Elektrokatalysatorschicht nach Anspruch 1 oder 2, wobei die thermische Zersetzung bei einer Temperatur im Bereich von 200 bis 1000°C durchgeführt wird.

**4.** Elektrokatalysatorschicht nach einem der Ansprüche 1 bis 3, wobei der Elektrokatalysator ein Pulver ist.

**5.** Elektrokatalysatorschicht nach einem der Ansprüche 1 bis 4, wobei die metallorganische Verbindung ein Sauerstoffatom enthält.

**6.** Elektrokatalysatorschicht nach einem der Ansprüche 1 bis 5, wobei der Elektrokatalysator eine spezifische Oberfläche nach BET im Bereich von 1 bis 1000 m$^2$/g aufweist.

**7.** Elektrokatalysatorschicht nach einem der Ansprüche 1 bis 6, der durch Zerstoßen des Metalloxids erhalten wird.

**8.** Elektrokatalysatorschicht nach einem der Ansprüche 1 bis 7, die außerdem elektronenleitende Teilchen aufweist.

**9.** Membranelektrodenaufbau, der eine Katode, eine Anode und eine zwischen der Katode und der Anode angeordnete Elektrolytmembran aufweist, wobei die Katode die in einem Ansprüche 1 bis 8 beschriebene Elektrokatalysatorschicht aufweist.

**10.** Brennstoffzelle, die den Membranelektrodenaufbau nach Anspruch 9 umfasst.

**11.** Brennstoffzelle nach Anspruch 10, die eine Polymerelektrolytbrennstoffzelle ist.

**Revendications**

**1.** Couche catalytique d'électrode comprenant un catalyseur d'électrode, le catalyseur d'électrode comprenant un oxyde métallique obtenu par décomposition thermique d'un composé organométallique sélectionné dans le groupe comprenant des alkoxydes de métal, des carboxylates de métal, des amides de métal et des complexes de métal/β-dicétone, dans laquelle l'élément métallique qui constitue le composé organométallique est sélectionné dans le groupe comprenant le niobium, le titane, le tantale et le zirconium.

**2.** Couche catalytique d'électrode selon la revendication 1, dans laquelle l'élément métallique qui constitue le composé organométallique est le niobium ou le titane.

**3.** Couche catalytique d'électrode selon la revendication 1 ou 2, dans laquelle la décomposition thermique est exécutée à une température comprise dans la gamme de 200°C à 1000°C.

**4.** Couche catalytique d'électrode selon l'une quelconque des revendications 1 à 3, dans laquelle le catalyseur d'électrode est une poudre.

**5.** Couche catalytique d'électrode selon l'une quelconque des revendications 1 à 4, dans laquelle le composé organométallique contient un atome d'oxygène.

6. Couche catalytique d'électrode selon l'une quelconque des revendications 1 à 5, dans laquelle le catalyseur d'électrode présente une aire de surface spécifique BET comprise dans la gamme de 1 $m^2$/g à 1000 $m^2$/g.

7. Couche catalytique d'électrode selon l'une quelconque des revendications 1 à 6, dans laquelle le catalyseur d'électrode est obtenu en broyant l'oxyde métallique.

8. Couche catalytique d'électrode selon l'une quelconque des revendications 1 à 7, comprenant en outre des particules conductrices d'électrons.

9. Ensemble d'électrode à membrane comprenant une cathode, une anode et une membrane électrolytique agencée entre la cathode et l'anode, dans lequel la cathode comprend la couche catalytique d'électrode décrite selon l'une quelconque des revendications 1 à 8.

10. Pile à combustible comprenant l'ensemble d'électrode à membrane selon la revendication 9.

11. Pile à combustible selon la revendication 10, qui est une pile à combustible à électrolyte polymère.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

[Fig. 15]

[Fig. 16]

[Fig. 17]

[Fig. 18]

[Fig. 19]

[Fig. 20]

[Fig. 21]

[Fig. 22]

[Fig. 23]

[Fig. 24]

[Fig. 25]

**EP 2 187 469 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004095263 A

- JP 2005063677 A